# EUROPÄISCHE PATENTSCHRIFT

(11) **EP 2 655 277 B1**
(45) Veröffentlichungstag und Bekanntmachung des Hinweises auf die Patenterteilung: **20.04.2016**
(21) Anmeldenummer: 11819046.1
(22) Anmeldetag: 21.12.2011
(51) Int. Cl.: C03C 13/06

(54) **ENDLOSBASALTFASER**
CONTINUOUS BASALT FIBRES
FIBRES DE BASALTE CONTINUES

(30) Priorität: 22.12.2010 AT 21162010
(43) Veröffentlichungstag der Anmeldung: 30.10.2013
(73) Patentinhaber: ASA.TEC GmbH, A-3550 Langenlois (AT)
(72) Erfinder: SCHINKINGER, Thomas, A-4072 Alkoven (AT); MAYER, Anton, A-8700 Leoben (AT)
(74) Vertreter: Burger, Hannes
(86) Internationale Anmeldenummer: PCT/AT2011/050053
(87) Internationale Veröffentlichungsnummer: WO 2012/088561

(56) Entgegenhaltungen:
- EP-A2- 0 768 283
- AT-A4- 509 991
- DE-A1- 2 652 149
- US-A- 3 557 575
- US-A- 4 149 866
- US-A- 4 199 336

## Beschreibung

Die Erfindung betrifft Endlosbasaltfasern umfassend die Elemente Si, Al, Fe, Mn, Ti, Ca, Mg, K, Na und O, wobei das Si-Zentralatom von vier Sauerstoffatomen umgeben ist und die weiteren Elemente ebenfalls von Sauerstoffatomen in verschiedener Koordination umgeben sind oder zumindest an Sauerstoffatome gekoppelt sind und weitere Struktureinheiten bilden sowie ein Verfahren zur Herstellung der erfindungsgemäßen Basaltfasern.

Basaltfasern sind dünne Fasern aus Basalt und gehören in die Kategorie der Mineralfasern (MMF - man made mineral fibers). Sie werden aus einer flüssigen Basaltschmelze bei etwa 1400 °C hergestellt. Die Faser besitzt eine grünlich-braune Färbung. Die Zusammensetzung der Schmelze beeinflusst die physikalischen Eigenschaften der Basaltfaser. Im Gegensatz zur Kohlenstofffaser oder Aramidfaser ist die Basaltfaser nicht verstreckt sondern, wie die Glasfaser, amorph. Basaltfasern werden als Verstärkungsfasern in Faser-Kunststoff-Verbunden oder als Hitzeschutzmaterial eingesetzt. Die physikalischen Eigenschaften und damit die Anwendungsgebiete sind denen der Glasfaser ähnlich. In Form von Isolierwolle sind sie jedoch dicker als Glasfaser und sehr spröde. Man muss hier jedoch klar zwischen Basaltwolle und Endlosbasaltfaser unterscheiden. Endlosbasaltfasern sind gesundheitlich unbedenklich und finden ihre Verwendung hauptsächlich in Composite Applikationen (Leichtbau bei PKW und Nutzfahrzeugen). Mit neuen Technologien können aber auch feinste Fasern mit einer Dicke von unter 0,01 mm hergestellt und zum Gewebe verarbeitet werden.

Die Vorteile der Basaltfaser liegen in einem größeren Temperatureinsatzbereich (- 260 °C bis + 700 °C), einem 20 % bis 30 % höheren E-Modul als bei der E-Glasfaser und erreicht das Niveau von Aramidfasern, einer höheren thermischen und elektrischen Leitfähigkeit im Vergleich zu E-Glas, sodass sich hieraus schnellere Zykluszeiten beim Spritzgießen ergeben können.

Werden Basaltfasern zur Armierung, wie beispielsweise von Zement oder Beton, verwendet, müssen sie eine hohe Zugfestigkeit und hohe chemische Beständigkeit aufweisen, um mit den aus dem Stand der Technik bekannten alkaliresistenten Glasfasern, die allerdings sehr teuer und aufwändig in der Herstellung sind, und Aramid- bzw. Kohlenstofffasern konkurrieren zu können.

Aufgabe der vorliegenden Erfindung ist es daher eine Basaltfaser mit verbesserter Zugfestigkeit zur Verfügung zu stellen.

Die Aufgabe der Erfindung wird jeweils eigenständig durch eine Basaltfaser umfassend die Elemente Si, Al, Fe, Mn, Ti, Ca, Mg, K, Na und O, wobei das Si-Zentralatom von vier Sauerstoffatomen umgeben ist und die weiteren Elemente ebenfalls von Sauerstoffatomen in verschiedener Koordination umgeben oder zumindest an Sauerstoffatome gekoppelt sind und weitere Struktureinheiten bilden, wobei präorientierte bzw. orientierte Molekülstrukturen, insbesondere Domänen, in einer ansonsten röntgenamorphen Struktur vorliegen sowie einem Verfahren zur Herstellung der erfindungsgemäßen Basaltfasern, wobei das Rohmaterial umfassend 30 % bis 70 % Basalt und/oder Diabas, 8 % bis 40 % Quarzkomponente, insbesondere Quarzsand, und 5 % bis 30 % Schlacke, insbesondere Hochofenschlacke, zu Partikeln gemahlen wird, aus den Partikeln Formkörper hergestellt werden, bereits vor dem Aufschmelzen einen Temperaturbereich durchlaufen, bei dem die Komponenten des Rohmaterials miteinander reagieren und neue Mineralphasen und molekulare Strukturen bilden, und in einer Schmelzwanne geschmolzen werden, die Schmelze durch einen Feederkanal über einen Fließspeiser dem Düsenstock bzw. Bushing zugeführt wird und Basaltfasern gezogen werden, gegebenenfalls ein Sizing erfolgt, und in weiterer Folge gegebenenfalls dem Wickler zugeführt werden. Vorteilhaft dabei erweist sich, dass eine hohe Zugfestigkeit erreicht werden kann. Durch die präorientierten bzw. orientierten Molekülstrukturen, insbesondere Domänen, ist die mechanische Festigkeit der Basaltfaser wesentlich größer als die des Ausgangsbasalts. Die erfindungsgemäße Endlosbasaltfaser zeichnet sich weiters durch optimierte chemischthermische Eigenschaften, vor allem durch hohe Temperaturbeständigkeit, hohe Reißfestigkeit, hohe chemische Beständigkeit, vor allem in alkalischen pH-Wert Bereichen, sehr gute Dämm- und Dehnungseigenschaften und gute Recyclingfähigkeit aus.

Vorzugsweise bilden die Strukturbaueinheiten eine Nahordnung aus, wobei die atomaren und molekularen Abstände und Winkel zwischen positiv geladenem Zentralatom und den umgebenden negativ geladenen Sauerstoffatomen unregelmäßig sind und die präorientierten bzw. orientierten Molekülstrukturen, insbesondere Domänen, eine nichtkristalline Fernordnung bilden, wodurch eine höhere Zugfestigkeit, insbesondere höher als jene von E-Glas, erreicht werden kann.

Die präorientierten bzw. orientierten Molekülstrukturen, insbesondere Domänen, können eine Fernordnung von Ketten- und/oder Bandmolekülen ähnlich der Pyroxenstruktur aufweisen, was wiederum die hohe Zugfestigkeit erklärt. Zudem ist die erfindungsgemäße Basaltfaser UV-Licht beständig, nicht toxisch und verhält sich chemisch vollkommen inert.

Vorteilhafterweise ist der Anteil der Kettenmoleküle ähnlich der Pyroxenstruktur aus einem Bereich mit einer unteren Grenze von 20 % und einer oberen Grenze von 80 % ausgewählt, wodurch die verbesserten Werte für die Zugfestigkeit erreicht werden und somit die Verwendungsmöglichkeiten der erfindungsgemäßen Basaltfaser vergrößert werden.

Das E-Modul der Basaltfaser weist einen Wert mit einer unteren Grenze von 60000 MPa und einer oberen Grenze von 150000 MPa auf, wodurch eine hohe Steifigkeit erzielt wird und insbesondere die Eignung der Basaltfaser für Armierungszwecke verbessert.

Vorzugsweise weist die Zugfestigkeit der Basaltfaser einen Wert mit einer unteren Grenze von 1500 MPa und einer oberen Grenze von 8000 MPa auf, wodurch die mechanische Belastung für die Basaltfaser sehr groß sein kann ohne zu reißen.

Der Wert für die Dichte ist aus einem Bereich mit einer unteren Grenze von 2,0 g/cm³ und einer oberen Grenze von 3,0 g/cm³, insbesondere 2,3 g/cm³, ausgewählt, wobei vorteilhaft bei geringer Erhöhung der Dichte die Zugfestigkeit und die Steifigkeit erheblich gesteigert werden können.

In einer Ausführungsvariante werden die Formkörper in einer Schmelzwanne geschmolzen, die Schmelze durch einen Feederkanal über einen, insbesondere in die Schmelze hineinragenden, Fließspeiser dem Bushing zugeführt und die Basaltfasern gezogen und in weiterer Folge dem Wickler zugeführt, wodurch ein bereits etabliertes Herstellungsverfahren für die Herstellung der erfindungsgemäßen Basaltfaser verwendet werden kann und somit die Kosten für die Evaluierung eines völlig neuen Herstellungsverfahren eingespart werden können. Es müssen lediglich die Verfahrensparameter angepasst werden.

Die Formkörper durchlaufen vor dem Aufschmelzen einen Temperaturbereich von Raumtemperatur bis 1200°C, wodurch einerseits bessere physikalische Eigenschaften, wie höhere Abriebfestigkeit und geringere Abplatzungen erzielt werden können und andererseits der Platzbedarf für die Lagerung zur Trocknung entfällt. Ferner können der Basalt und/oder Diabas, Quarzkomponente, insbesondere Quarzsand, und die Schlacke, insbesondere Hochofenschlacke, miteinander reagieren und neue Mineralphasen und molekulare Strukturen bilden. Die so gebildeten neuen Mineralphasen schmelzen im Schmelzofen vollständig auf, wobei zuvor vorhandene Molekularstrukturen erhalten bleiben bzw. bei der Abkühlung wieder neu gebildet werden. Dabei erinnert sich der Werkstoff an seinen früheren Zustand.

Zum besseren Verständnis der Erfindung wird diese anhand der nachfolgenden Figuren näher erläutert.

Es zeigen jeweils in stark schematisch vereinfachter Darstellung:
- Fig. 1: Röntgendiffraktionsdiagramm einer erfindungsgemäßen Basaltfaser;
- Fig. 2: Röntgendiffraktionsdiagramm der erfindungsgemäßen Basaltfaser bei unterschiedlichen Temperaturen;
- Fig. 3: Röntgendiffraktionsdiagramm einer Mineralfaser (Glasfaser) aus dem Stand der Technik bei unterschiedlichen Temperaturen.

Einführend sei festgehalten, dass in den unterschiedlich beschriebenen Ausführungsformen gleiche Teile mit gleichen Bezeichnungen versehen werden, wobei die in der gesamten Beschreibung enthaltenen Offenbarungen sinngemäß auf gleiche Teile mit Bezeichnungen übertragen werden können. Auch sind die in der Beschreibung gewählten Lageangaben, wie z.B. oben, unten, seitlich usw. auf die unmittelbar beschriebene Ausführungsform bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die erfindungsgemäße Basaltfaser, welche die Elemente Si, Al, Fe, Mn, Ti, Ca, Mg, K, Na, O und gegebenenfalls B, P, S, Cr, Zr und Li umfasst, bildet Strukturbaueinheiten und weist orientierte bzw. präorientierte Molekülstrukturen, insbesondere Domänen, in einer ansonsten röntgenamorphen Struktur auf. Die orientierten bzw. präorientierten Domänen liegen in Form von Ketten- und/oder Bandmolekülen ähnlich einer Pyroxenstruktur, wie Ortho- und Klinopyroxenen, vor. Bei den Klinopyroxenen finden sich vorwiegend Augit und Diopsid.

Die Strukturbaueinheiten bilden eine Nahordnung, wobei die atomaren und molekularen Abstände und Winkel zwischen positiv geladenem Zentralatom und den umgebenden negativ geladenen Sauerstoffatomen unregelmäßig sind und die orientierten bzw. präorientierten (teilkristallinen) Molekülstrukturen, insbesondere Domänen, eine nichtkristalline Fernordnung bilden.

Die Nahordnung der Schmelze ist aus strukturellen Einheiten aufgebaut, die auch den Aufbau der korrespondierenden amorphen Phasen charakterisieren. Die grundlegende Baueinheit für die Schmelze zur Herstellung von Basaltfasern ist der [SiO₄]⁴⁻ -Tetraeder. Der Sauerstoff, der zwei benachbarte [SiO₄]⁴⁻ -Tetraeder verbindet, wird als Brückensauerstoff oder brückenbildender Sauerstoff bezeichnet. Durch die Einlagerung von Alkali- und Erdalkalioxiden, die als Netzwerkwandleroxide (Na₂O, K₂O, Li₂O etc.) und Zwischenoxide (wie die zweiwertigen Metalle bzw. Metalloxide, wie CaO, MgO, BaO, FeO, etc.) fungieren, wird das Netzwerk depolymerisiert. Ein entgegen gesetzter Effekt wird durch die zusätzliche Anwesenheit von Aluminium im Netzwerk hervorgerufen. Der [SiO₄]⁴⁻ -Tetraeder ist eine nahezu starre Einheit unabhängig vom Grad der Polymerisation. Die Veränderungen in der Struktur werden durch die Bindungswinkel Si-O-Si (Brückenwinkel) sowie Bindungslängen Si-O (Brückensauerstoff) bestimmt.

Die erfindungsgemäße Basaltfaser zeichnet sich durch eine 30 % bis 40 % höhere Zugfestigkeit im Vergleich zu bisherigen Basaltfasern aus. Dies wird durch Vorliegen bzw. die Neubildung von präorientierten Molekularstrukturen, insbesondere mit einer Ketten- bzw. Bandstruktur, erreicht. Die höhere Zugfestigkeit wird durch die nichtkristalline Fernordnung der Moleküle erreicht.

Die Basaltfasern bestehen hauptsächlich aus verzehrten SiO₄-Tetraedern. Durch Temperaturbehandlung bilden sich Ketten- und/oder Bandmolekülen ähnlich einer Pyroxenstruktur. Unter Zunutzemachung der temperatur- und zeitabhängigen homogenen und heterogenen Keim- und Kristallbildungsmechanismen,kann über gesteuerte Keimbildungs- und Kristallwachstumszyklen auch eine Teilkristallinität erreicht werden.

Eine mögliche Herstellungsvariante für die erfindungsgemäße Basaltfaser umfasst eine Vorbehandlung des Rohmaterials bevor es in den Schmelzofen gelangt. Das Rohmaterial, insbesondere Gestein, wird während der Vorbehandlung vermahlen, anschließend werden Formkörper gebildet und zuletzt durchlaufen die Formkörper eine Temperaturbehandlung ausgewählt aus einem Bereich von Raumtemperatur bis 1200°C, wobei in diesem Verfahrensschritt in einer Vorreaktion bereits Strukturen gebildet werden, die Vorläufer für die präorientierten bzw. orientierten (teilkristallinen) Molekülstrukturen, insbesondere Domänen, sind. Durch die Kompaktierung zu Formkörper gelangen die einzelnen Partikel auch so knapp zueinander, dass sie schneller reagieren können als im Vergleich zu losen Partikeln, wo dazwischen Hohlräume vorliegen. Zudem findet bereits eine Vorreaktion vor dem vollständigen Aufschmelzen der Ausgangsmaterialien im Schmelzofen statt, woraus höhere Festigkeiten als bei üblichen Glas- und Basaltfaserwerkstoffen resultieren.

Die Ketten- und/oder Bandmolekülstruktur liegt bereits in der Schmelze bei ca. 1500°C vor und bildet sich im Zuge des Abkühlvorganges, dem Weg der Schmelze, weiter aus. Der Weg der Schmelze umfasst nachfolgende Schritte:
a) Teilschmelze während des Einlege-, Vorwärm- und Aufschmelzvorganges;
b) vollkommene Schmelze im Schmelzofen bei ca. 1500°C oder höher;
c) Schmelzenfluss im Feederkanal → weniger als 1500° bzw. niedriger als in der Schmelzwanne;
d) im Fließspeiser erfolgt eine weitere Abkühlung, die der Grenze der Platin- bzw. Platinlegierungsbeanspruchung entspricht;
e) im Bushing bzw. Düsenstock erfolgt eine weitere Abkühlung auf etwa 1250- 1350°C;
f) während des Faserziehvorgangs und gegebenenfalls Sizing wird eine Abkühlung von 1250-1350°C auf Temperaturen unter 100°C durchgeführt.

Bei Wärmebehandlung der erfindungsgemäßen Basaltfaser kommt es zu Mineralneubildungen mit Kristallinität und Teilkristallinität. Vor allem Klino- und Orthopyroxen bildet sich neu bzw. verstärkt seine Peaks in einer röntgendiffraktometrischen Analyse. Es kommt somit zu einer Erhöhung der Kristallinität. Zudem tritt noch Plagioklas auf.

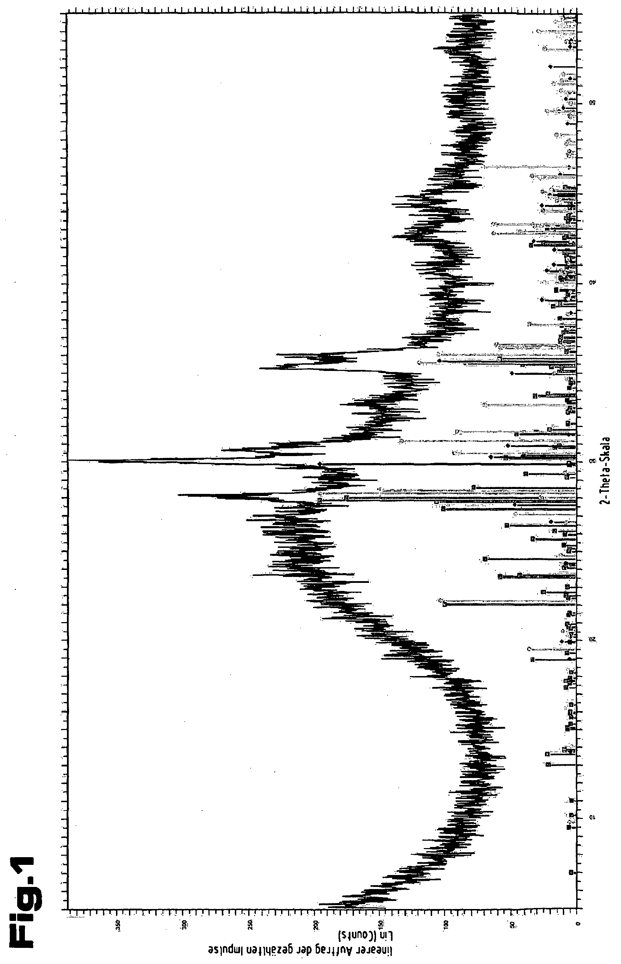

Ein Röntgendiffraktogramm einer erfindungsgemäßen Basaltfaser wird in Fig. 1 gezeigt. Die Messparameter für die Erstellung des Röntgendiffraktogramm sind: Strahlungsquelle: Cu K alpha, bei einer Temperatur von 25 °C, in einem Winkelbereich von 2-Theta 5°. Die Peaks mit einem Quadrat zeigen Anorthit Ca(Al2Si208), triklin - a 8,18400 - b 12,89000 - c 14,21400 - □ 93,220 - □ 115,9 □ 91,13; die Peaks mit einer Raute zeigen Klinopyroxen Ca0,970Co0,030(Mg0,831 Co0,169)(Si206), monoklin - a 9,7527 - b 8,9261- c 5,2486 - □ 90 - □ 105,856 - □ 90; und die Peaks mit einem Kreis zeigen Orthopyroxene Mg1,12Fe0,88Si2O6, orthorombisch - a 18,224 - b 8,775 - c 5,179 - □ 90 - □ 90 - □ 90.

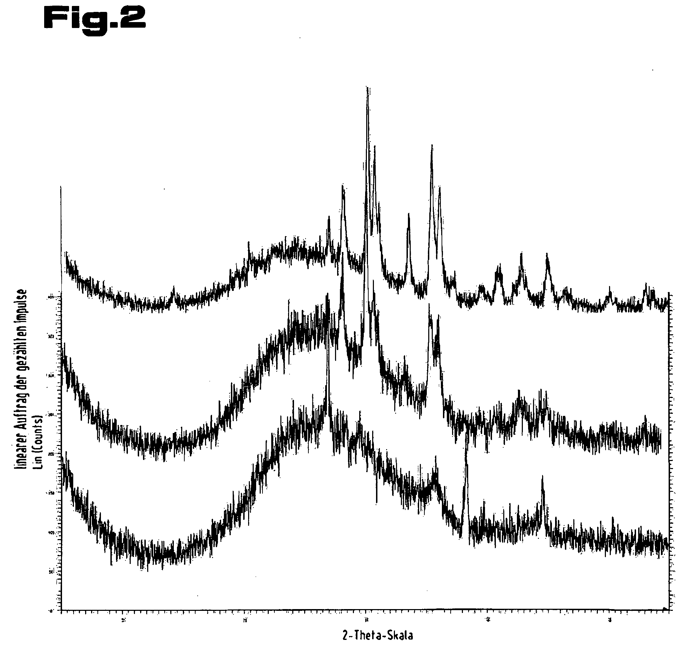

Fig. 2 zeigt ein Röntgendiffraktogramm der erfindungsgemäßen Faser, wobei die Kurven von unten nach oben eine Analyse der Endlosbasaltfaser bei einer Wärmebehandlung von 800 °C, 900°C und 1000°C zeigen. Aus den eingangs in der Präorientierungsphase verzerrten SiO₄ Tetraeder bilden sich zeit- und temperaturabhängig verstärkt reguläre Tetraeder, komplexe Silikate und regelmäßige Mineralstrukturen, insbesondere Pyroxene, aus, womit auch die Kristallinität in den Fasern steigt.

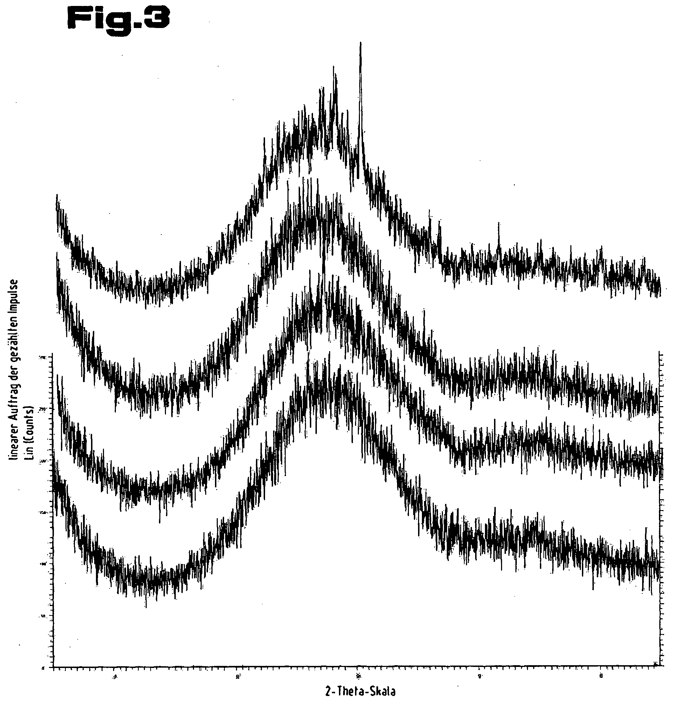

Bei Vergleichsfasern (Glasfasern) aus dem Stand der Technik erhöht sich die Kristallinität in dem untersuchten Temperaturfeld viel weniger als bei der erfindungsgemäßen Basaltfaser. Fig. 3 zeigt ein Röntgendiffraktionsdiagramm einer Mineralfaser (Glasfaser) aus dem Stand der Technik bei unterschiedlichen Temperaturen, wobei von unten nach oben zuerst die unbehandelte Faser gezeigt wird, anschließend eine Wärmebehandlung von 800°C, 900 °C und 1000°C.

Die Stärke der Präorientierung, also der Anteil der Kettenmolekülstruktur ähnlich der Pyroxenstruktur, ist aus einem Bereich mit einer unteren Grenze von 20% und einer oberen Grenze von 80 % ausgewählt, vorzugsweise 40% bis 60 %, insbesondere 45 % bis 55%, wobei durch eine längere Wärmebehandlung sowie einer höheren Temperatur eine vermehrte Mineralneubildung, insbesondere Pyroxenbildung erfolgt. Auch der Faserdurchmesser spielt eine Rolle. So weisen dünnere Fasern bei gleicher Dauer und Temperaturbehandlung einen höheren Pyroxenanteil auf als dickere Endlosbasaltfasern.

Die erfindungsgemäßen Basaltfasern weisen einen Durchmesser ausgewählt aus einem Bereich mit einer unteren Grenze von 5 µm und einer oberen Grenze von 40 µm, vorzugsweise von 7 µm bis 25 µm, insbesondere 9 µm bis 16 µm, auf.

Das Misch- und Mahlgut des Rohmaterials kann auf ca. 50 % Basalt, ca. 20 % Hochofenschlacke, ca. 30 % Quarzsand und Ton basieren. In alternativen Ausführungsvarianten kann das Ausgangsmaterial auch nur Basalt, bzw. nur ausgewählte Zusatzstoffe wie nur Hochofenschlacke, Quarzsand oder Ton umfassen. Es ist auch möglich weitere Stoffe dem Ausgangsmaterial beizumengen. Weitere Zusammensetzungen, die ebenfalls Basis für erfindungsgemäße Basaltfasern bilden, sind in der Patentanmeldung WO 2012/083334 A2 der Anmelderin "Rohmaterial zur Herstellung von Basaltfasern" vom 28/06/12 offenbart. Die Formkörper können mithilfe unterschiedlicher Verfahren hergestellt werden, wobei diese ebenfalls in einer Patentanmeldung WO 2012/083335 A1 der Anmelderin "Vorbehandlung von Rohmaterial zur Herstellung von Basaltfasern" vom 28/06/12 offenbart sind.

Die Formkörper durchlaufen vor dem Aufschmelzen einen Temperaturbereich von Raumtemperatur bis 1200°C für einen Zeitraum von 2 bis 15 Minuten. Vorzugsweise betragen die Temperaturen ca. 300°C±50°C.

Das erfindungsgemäße Verfahren umfasst folgende Verfahrensschritte: a) die Formkörper werden in einer Schmelzwanne geschmolzen, b) die Schmelze wird durch einen Feederkanal über einen Fließspeiser dem Düsenstock bzw. Bushing zugeführt, wo die Basaltfasern gezogen werden und gegebenenfalls c) ein Sizing erfolgt und d) in weiterer Folge dem Wickler zugeführt. Die wärmebehandelten Formkörper werden in eine Schmelzwanne eingebracht, wo eine Oberofentemperatur von bis 1750°C herrscht und die Schmelztemperatur bis 1600°C beträgt. Es herrscht ein Herdraumdruck von 0,5 bis 3 mmWS (1mmWS= 0,09807 mbar). Zur Beheizung werden vorzugsweise 2 Brenner mit GaS/O₂ Zufuhr verwendet. Im Feederkanal herrscht eine Oberofentemperatur bis 1550°C und eine Schmelzbadtemperatur bis 1500°C, die durch 9 Brenner mit Gas/O₂ Beheizung erzeugt wird. Im Feederkanal ist die Temperatur in jedem Fall niederiger als im Schmelzofen. Der Fließspeiser weist einen Durchmesser von ca. 15 bis 23 mm auf und hat eine Temperatur bis 1450°C. Es wird eine Leistung von bis 80 kg/h pro Spinnstelle erreicht. Im Bushing mit bis zu 2000 Tips beträgt die Temperatur bis 1500°C und es wird ebenfalls die Leistung von bis 80 kg/h pro Spinnstelle erzielt. Die Basaltfasern werden dabei erheblich abgekühlt. Nachfolgend kann noch ein Sizing der Endlosbasaltfaser erfolgen. Der Wickler kann eine Leistung von 0 bis 3600 m/min aufweisen.

Es können auch andere wie das vorab beschriebene Verfahren zur Herstellung der erfindungsgemäßen endlosen Basaltfaser mit verbesserter Zugfähigkeit verwendet werden.

Die Ausführungsbeispiele zeigen mögliche Ausführungsvarianten der Basaltfaser, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrundeliegende Aufgabe kann der Beschreibung entnommen werden.

## Patentansprüche

1. Endlosbasaltfaser umfassend die Elemente Si, Al, Fe, Mn, Ti, Ca, Mg, K, Na und O, wobei das Si-Zentralatom von vier Sauerstoffatomen umgeben ist, und die weiteren Elemente ebenfalls von Sauerstoffatomen in verschiedener Koordination umgeben oder zumindest an Sauerstoffatome gekoppelt sind und weitere Struktureinheiten bilden, **dadurch gekennzeichnet, dass** präorientierte bzw. orientierte Molekülstrukturen, insbesondere Domänen, in einer ansonsten röntgenamorphen Struktur vorliegen.

2. Endlosbasaltfaser nach Anspruch 1, **dadurch gekennzeichnet, dass** die Strukturbaueinheiten eine Nahordnung ausbilden, wobei die atomaren und molekularen Abstände und Winkel zwischen positiv geladenen Zentralatom und den umgebenden negativ geladenen Sauerstoffatomen unregelmäßig sind und die präorientierten bzw. orientierten Molekülstrukturen, insbesondere Domänen, eine nichtkristalline Fernordnung bilden.

3. Endlosbasaltfaser nach Anspruch 2, **dadurch gekennzeichnet, dass** die präorientierten bzw. orientierten Molekülstrukturen, insbesondere Domänen, eine Fernordnung von Ketten- und/oder Bandmolekülen ähnlich einer Pyroxenstruktur aufweisen.

4. Endlosbasaltfaser nach Anspruch 3, **dadurch gekennzeichnet, dass** der Anteil der Kettenmoleküle ähnlich der Pyroxenstruktur aus einem Bereich mit einer unteren Grenze von 20 % und einer oberen Grenze von 80 % ausgewählt ist.

5. Endlosbasaltfaser nach einem der Ansprüche 1 bis 4, **dadurch gekennzeichnet, dass** das E-Modul der Basaltfaser einen Wert mit einer unteren Grenze von 60000 MPa und einer oberen Grenze von 150000 MPa aufweist.

6. Endlosbasaltfaser nach einem der Ansprüche 1 bis 5, **dadurch gekennzeichnet, dass** die Zugfestigkeit der Basaltfaser einen Wert mit einer unteren Grenze von 1500 MPa und einer oberen Grenze von 8000 MPa aufweist.

7. Endlosbasaltfaser nach einem der Ansprüche 1 bis 6, **dadurch gekennzeichnet, dass** die Dichte einen Wert mit einer unteren Grenze von 2,0 g/cm³ und einer oberen Grenze von 3,0 g/cm³ aufweist.

8. Verfahren zur Herstellung einer Endlosbasaltfaser nach einem der Ansprüche 1 bis 7, **dadurch gekennzeichnet, dass** Rohmaterial umfassend 30 % bis 70 % Basalt und/oder Diabas, 8 % bis 40 % Quarzkomponente, insbesondere Quarzsand, und 5 % bis 30 % Schlacke, insbesondere Hochofenschlacke, zu Partikeln gemahlen wird, aus den Partikeln Formkörper hergestellt werden, die Formkörper bereits vor dem Aufschmelzen einen Temperaturbereich durchlaufen, bei dem die Komponenten des Rohmaterials miteinander reagieren und neue Mineralphasen und molekulare Strukturen bilden, und in einer Schmelzwanne geschmolzen werden, die Schmelze durch einen Feederkanal über einen Fließspeiser dem Düsenstock bzw. Bushing zugeführt wird und Endlosbasaltfasern gezogen werden, gegebenenfalls ein Sizing erfolgt, und in weiterer Folge gegebenenfalls dem Wickler zugeführt werden.

9. Verfahren nach Anspruch 8, **dadurch gekennzeichnet, dass** die Formkörper vor dem Aufschmelzen einen Temperaturbereich von Raumtemperatur bis 1200°C durchlaufen.

## Claims

1. A continuous basalt fibre comprising the elements Si, Al, Fe, Mn, Ti, Ca, Mg, K, Na and O, wherein the Si central atom is surrounded by four oxygen atoms and the further elements are likewise surrounded by oxygen atoms in different coordination or are at least coupled to oxygen atoms and form further structural units, **characterized in that** pre-oriented or oriented molecular structures, in particular domains, are present in an otherwise X-ray amorphous structure.

2. The continuous basalt fibre according to claim 1, **characterized in that** the structural units form a short-range order, wherein the atomic and molecular intervals and angles between the positively charged central atom and the surrounding negatively charged oxygen atoms are irregular and the pre-oriented or oriented molecular structures, in particular domains, form a non-crystalline long-range order.

3. The continuous basalt fibre according to claim 2, **characterized in that** the pre-oriented or oriented molecular structures, in particular domains, have a long-range order of chain and/or band molecules similar to a pyroxene structure.

4. The continuous basalt fibre according to claim 3, **characterized in that** the proportion of chain molecules similar to the pyroxene structure is chosen from a range with a lower limit of 20 % and an upper limit of 80 %.

5. The continuous basalt fibre according to one of claims 1 to 4, **characterized in that** the modulus of elasticity of the basalt fibres has a value with a lower limit of 60000 MPa and an upper limit of 150000 MPa.

6. The continuous basalt fibre according to one of claims 1 to 5, **characterized in that** the tensile strength of the basalt fibres has a value with a lower limit of 1500 MPa and an upper limit of 8000 MPa.

7. The continuous basalt fibre according to one of claims 1 to 6, **characterized in that** the density has a value with a lower limit of 2.0 g/cm³ and an upper limit of 3.0 g/cm³.

8. A method of producing a continuous basalt fibre according to one of claims 1 to 7, **characterized in that** raw material comprising 30 % to 70 % basalt and/or diabase, 8 % to 40 % quartz components, in particular quartz sand, and 5 % to 30 % slag, in particular blast furnace slag, is ground into particles, moulds are made from the particles, the moulds pass through a temperature range before melting in which the components of the raw material react with one another and form new mineral phases and molecular structures and are melted in a melting tank, the melt is fed through a feeder channel via a flow feeder to the nozzle holder or bushing and continuous basalt fibres are drawn, sizing takes place where necessary and they are fed to the winder where necessary in a further sequence.

9. The method according to claim 8, **characterized in that** the moulds pass through a temperature range from room temperature to 1200 °C before melting.

## Revendications

1. Fibre de basalte continue contenant les éléments Si, Al, Fe, Mn, Ti, Ca, Mg, K, Na et O, l'atome central de Si étant entouré par quatre atomes d'oxygène, et les autres éléments étant également entourés par des atomes d'oxygène dans diverses coordinations, ou au moins liés à des atomes d'oxygène et formant d'autres unités structurelles, **caractérisée en ce que** des structures moléculaires préorientées ou orientées, notamment des domaines, sont présentes dans une structure autrement amorphe aux rayons X.

2. Fibre de basalte continue selon la revendication 1, **caractérisée en ce que** les unités structurelles forment un ordre à courte distance, dans lequel les distances atomiques et moléculaires et les angles entre l'atome central chargé positivement et les atomes d'oxygène chargés négativement environnants sont irréguliers et forment les structures moléculaires préorientées ou orientées, notamment des domaines, avec un ordre à longue distance non-cristallin.

3. Fibre de basalte continue selon la revendication 2, **caractérisée en ce que** les structures moléculaires préorientées ou orientées, notamment des domaines, présentent un ordre à longue distance de molécules de chaînes/ ou des molécules de bande, similaires à une structure de pyroxène.

4. Fibre de basalte continue selon la revendication 3, **caractérisée en ce que** la proportion de molécules de chaîne similaires à une structure de pyroxène est sélectionnée dans une plage ayant une limite inférieure de 20 % et une limite supérieure de 80 %.

5. Fibre de basalte continue selon l'une quelconque des revendications 1 à 4, **caractérisée en ce que** le module d'élasticité de la fibre de basalte présente une valeur ayant une limite inférieure de 60 000 MPa et une limite supérieure de 150 000 MPa.

6. Fibre de basalte continue selon l'une quelconque des revendications 1 à 5, **caractérisée en ce que** la résistance à la traction de la fibre de basalte présente une valeur ayant une limite inférieure de 1 500 MPa et une limite supérieure de 8 000 MPa.

7. Fibre de basalte continue selon l'une quelconque des revendications 1 à 6, **caractérisée en ce que** la densité présente une valeur ayant une limite inférieure de 2,0 g/cm³, et une limite supérieure de 3,0 g/cm³.

8. Procédé de production d'une fibre de basalte continue selon l'une quelconque des revendications 1 à 7, **caractérisé en ce qu'**une matière première comprenant 30 % à 70 % de basalte et/ou de diabase, 8 % à 40 % de composant de quartz, notamment du sable de quartz, et 5 % à 30 % de laitier, en particulier du laitier de haut fourneau , est broyée en particules, un corps moulé est fabriqué à partir des particules, le corps moulé passant par une plage de températures avant la fusion, de telle sorte que les composants de la matière première réagissent les uns avec les autres et forment de nouvelles phases minérales et structures moléculaires, et sont fondus dans un four, la masse fondue est acheminée à travers un canal d'alimentation par l'intermédiaire d'un distributeur en continu du porte-buse, ou plutôt d'une bague, et des fibres de basalte continues sont étirées, éventuellement un calibrage est effectué, et lors d'une étape supplémentaire, sont acheminées jusqu'à la bobineuse.

9. Procédé selon la revendication 8, **caractérisé en ce que** les corps moulés passent par une plage de températures avant la fusion allant de la température ambiante jusqu'à 1 200°C.
